# EUROPÄISCHE PATENTSCHRIFT

(11) **EP 1 247 554 B1**
(45) Veröffentlichungstag und Bekanntmachung des Hinweises auf die Patenterteilung: **04.08.2004**
(21) Anmeldenummer: 02001830.5
(22) Anmeldetag: 26.01.2002
(51) Int. Cl.: A63H 17/26, A63H 17/05

(54) **Modell-Fahrwerk eines LKW**
Model running gear for a lorry
Miniature train de roulement d'un camion

(30) Priorität: 29.03.2001 DE 20105614 U
(43) Veröffentlichungstag der Anmeldung: 09.10.2002
(73) Patentinhaber: Conrad, Günther, 91338 Igensdorf (DE)
(72) Erfinder: Conrad, Günther, 91338 Igensdorf (DE)
(74) Vertreter: Schröer, Gernot H., Dipl.-Phys.

(56) Entgegenhaltungen:
- DE-U- 29 922 519
- DE-U- 29 922 520
- GB-A- 2 037 596

## Beschreibung

Die Erfindung betrifft ein Modell-Fahrwerk eines LKW, bei dem eine Fahrwerkeinheit an einem zum Tragen eines Aufbaues vorgesehenen Untergestell anmontiert ist, indem ein Querbalken der Fahrwerkeinheit an einem Gegenstück des Untergestells befestigt ist, bei dem der Querbalken an jedem Ende einstückig gegossen einen Bock trägt, von dem jeweils ein Schwingemittel ausgeht, und bei dem die beiden Schwingemittel einstückig gegossen mit einer Starrachse sind und jeweils auf der dem zugeordneten Bock gegenüberliegenden Seite der Starrachse einstückig gegossen Federmittel tragen.

Bei einem durch die Praxis bekannten Modell-Fahrwerk dieser Art ist das Schwingemittel mit dem zugehörigen Bock einstückig gegossen bzw. gespritzt, also auch mit dem Querbalken ein Stück. Das Schwingemittel ist relativ zum Bock unbeweglich. Das Federmittel ist ein mit dem Schwingemittel und der Starrachse insgesamt einstückig gegossenes Massivteil, das der Außenkontur nach einen Topf bzw. einen Zylinder und ein davon wegragendes Zapfenstück bildet. Die gesamte Fahrwerkeinheit ist insoweit ein insgesamt gegossenes bzw. gespritztes Teil. Andererseits ist ein wirklicher LKW mit einem wirklichen Fahrwerk bekannt (Prospektblatt "SAF MODUL SK 500" der Otto Sauer Achsenfabrik Keilberg), bei dem ein Schwingemittel jeweils ein von einem Bock gesondertes Schwingestück ist, das am Bock mittels eines Schwinggelenks angebracht ist.

Eine Aufgabe der Erfindung ist es nun, ein Modell-Fahrwerk der eingangs genannten Art, bei dem die Federmittel einerseits mit dem Querstück durch einstückiges Gießen verbunden sind und andererseits mit dem Schwingemittel durch einstückiges Gießen verbunden sind, zu schaffen, bei dem das Schwingemittel ein drehbar angebrachtes gesondertes Schwingestück ist.

Das erfindungsgemäße Modell-Fahrwerk ist, diese Aufgabe lösend, dadurch gekennzeichnet, daß das Schwingemittel jeweils ein vom Bock gesondertes Schwingestück ist, das am Bock mittels eines Schwinggelenks angebracht ist und zwischen einer ersten Stellung und einer zweiten Stellung drehbar ist, und daß die Federmittel eine Hülse und einen in diese ragenden Zapfen bilden, die gegeneinander beweglich sind und von denen das eine mit dem Schwingestück einstückig gegossen ist und das andere über eine Strebe mit dem Querbalken einstückig gegossen ist.

Bei dem erfindungsgemäßen Modell-Fahrwerk ist die Fahrwerkeinheit von zwei und nur zwei jeweils einstückig gegossenen bzw. gespritzten Teileinheiten gebildet. Das Material der Fahrwerkeinheit bzw. der Teileinheiten ist in der Regel Metall. Die Verwirklichung des am Bock angelenkten Schwingestücks ist erfolgt in Verbindung mit dem von Hülse und Zapfen gebildeten zweiteiligen Federmittel, dessen beiden Teile jeweils mit anderen Teilen der Fahrwerkeinheit einstückig gespritzt bzw. gegossen sind. An Montageaufwand ist nur die Herstellung der beiden Schwinggelenke zusätzlich dazugekommen. Die derart hergestellte Fahrwerkeinheit wird wie bisher an dem Untergestell anmontiert. Wegen der Zweiteiligkeit ist die zusätzliche Strebe vorgesehen, die der Festlegung des zweiten Teils, Hülse oder Zapfen, des Federmittels dient.

Besonders zweckmäßig und vorteilhaft ist es, wenn bei der ersten Stellung des Schwingestücks die Hülse gegen die Strebe gelegt ist. Die Hülsen und die Streben werden also dazu benutzt, die erste, d. h. eine eingezogene Stellung der Fahrwerkeinheit zu bestimmen.

Besonders zweckmäßig und vorteilhaft ist es ebenso, wenn bei der zweiten Stellung des Schwingestücks ein an dem Schwingestück nahe dem Schwinggelenk vorgesehene, radial wegragenden Nase gegen einen Bereich des Bocks gelegt ist. Der Bock und das Schwingestück werden also dazu benutzt, die zweite, d. h. eine ausgefahrene Stellung der Fahrwerkeinheit zu bestimmen.

Besonders zweckmäßig und vorteilhaft ist es auch, wenn der Zapfen an der Strebe und die Hülse an dem Schwingestück sitzt. Dies vergrößert die Ähnlichkeit des Modells mit der Wirklichkeit.

Besonders zweckmäßig und vorteilhaft ist es noch, wenn der Bock ein Maul bildet, in dem ein Gelenkbereich des Schwingestücks beidseits geführt aufgenommen ist. Diese beidseitige Führung des Schwingestücks macht das schwenkbare Schwingestück kippsicher.

Besonders zweckmäßig und vorteilhaft ist es sodann, wenn die Strebe das Federmittel auf der dem Bock gegenüberliegenden Seite mit einem Fortsatz überragt und der Fortsatz mit einem seitlichen Loch zum montierenden Einschieben eines Schutzblech-Nippels versehen ist. Auch hier ist das Nippelmontage-Loch an einem einstückig gegossenen Fortsatz der Fahrwerkeinheit vorgesehen.

Eine besonders zweckmäßige und vorteilhafte Ausführungsform der Erfindung liegt vor, wenn zwei Fahrwerkeinheiten nebeneinander angeordnet sind und die in einer Linie angeordneten Streben der beiden Fahrwerkeinheiten einstückig gegossen ineinander übergehen. Die die Querstücke bildenden Gußteile der beiden benachbaitein Fahrwerkeinheiten sind also gemeinschaftlich einstückig durch Gießen bzw. Spritzen hergestellt.

An der Starrachse ist an jedem Ende entweder nur ein Rad oder ein Radpaar gelagert. Die Räder sind entweder - abgesehen von der Drehbarkeit - unbeweglich oder schwenk/lenkbar angebracht. Es liegt eine Pendelaufhängung der Räder vor, bei der die Räder der Fahrwerkeinheit sich bei einer Vertiefung in einer Fahrbahn weiter von dem Untergestell entfernen können. Die Anbringung des Querbalkens am Gegenstück erfolgt z. B. mittels Niete oder Schraube. Der LKW ist z. B. mit nur einer solchen Fahrwerkeinheit oder mit einer Reihe von zwei oder mehr solchen Fahrwerkeinheiten versehen. In der Regel ist das Schwinggelenk - relativ zum Federmittel gesehen - in Fahrtrichtung vorne angeordnet.

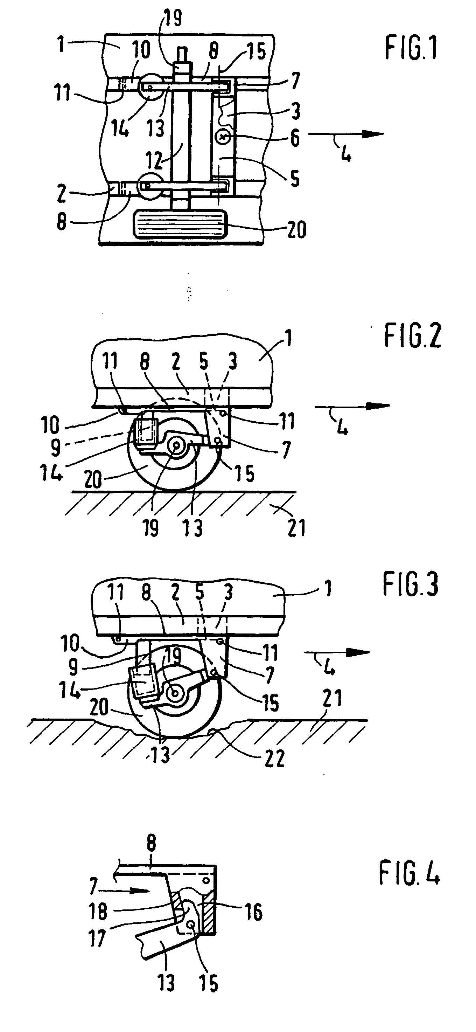

In der Zeichnung ist eine bevorzugte Ausführungsform der Erfindung dargestellt und zeigt Fig. 1 eine Unteransicht eines Teiles eines Modell-Fahrwerks eines LKW, Fig. 2 eine Seitenansicht der Darstellung in Fig. 1, bei einer ersten Stellung eines Schwingestücks, Fig. 3 die Seitenansicht gemäß Fig. 2, bei einer zweiten Stellung des Schwingestücks, und Fig. 4 eine Einzelheit der Darstellung in Fig. 3, mit einem Aufbruch und in einem gegenüber Fig. 3 vergrößerten Maßstab.

Das Modell-Fahrwerk gemäß Zeichnung befindet sich an der Unterseite eines Aufbaues 1, der an der Unterseite ein längliches Untergestell 2 trägt, das ein quer verlaufendes Gegenstück 3 bildet, das sich rechtwinkelig zu einer Fahrtrichtung 4 erstreckt. An dem Untergestell 2 ist eine Fahrwerkeinheit anmontiert, die aus zwei Teilen zusammengesetzt ist. Der eine Teil umfaßt einen rechtwinkelig zur Fahrtrichtung 4 verlaufenden Querbalken 5, der an das Gegenstück 3 angelegt ist und an diesem mittels einer Schraube 6 befestigt ist. Der Querbalken 5 trägt an jedem Ende einen von der Aufbau-Unterseite weg, nach unten ragenden Bock 7 und sitzt an einer parallel zur Aufbau-Unterseite verlaufenden Strebe 8, die an das Untergestell 2 angelegt ist. Die Strebe 8 trägt auch einen von der Aufbau-Unterseite weg, nach unten ragenden Zapfen 9 und überragt diesen Zapfen mit einem Fortsatz 10. Nahe diesem Fortsatz 10 und bei dem Bock 7 ist dieses Teil der Fahrwerkeinheit jeweils mit einem Nippelmontage-Loch 11 für das Anbringen eines nicht gezeigten Schutzbleches versehen.

Der zweite Teil der Fahrwerkeinheit umfaßt eine Starrachse 12, die parallel zu dem Querbalken 5 verläuft und die an beiden Enden je ein Schwingestück 13 trägt, wobei die Starrachse etwa in einem Mittenbereich des Schwingestücks angeordnet ist. An dem in Fahrtrichtung 4 hinten liegenden Endbereich des Schwingestücks 13 sitzt eine Hülse 14 bzw. ein Topf, die bzw. der zur Aufbau-Unterseite hinragt. Diese Hülse 14 paßt mit ihrer Höhlung über den Zapfen 9 und zwar mit großem Spiel gegenüber dem Zapfen. Der Zapfen 9 und die Hülse 14 bilden ein Federmittel. Der in Fahrtrichtung 4 wegragende Endbereich des Schwingestücks 13 ist an dem zugeordneten Bock 7 mittels eines Schwinggelenks 15 angebracht. Hierzu ragt dieser Endbereich gemäß Fig. 4 in ein als Maul 16 gestaltetes Teil des Bocks 7. In dem Maul 16 trägt das Schwingestück 13 eine wegragende Nase 17, die bei der in Fig. 3 und 4 gezeigten Stellung gegen einen Wandungs-Bereich 18 des Bocks 7gelegt ist. Die Starrachse 12 ist an jedem Ende mit einem aufgesteckten Achsstück 19 versehen, auf das wiederum ein Rad 20 gesteckt ist, das auf einer Fahrbahn 21 rollt, die auch eine Vertiefung 22 bildet.

## Patentansprüche

1. Modell-Fahrwerk eines LKW,
bei dem eine Fahrwerkeinheit an einem zum Tragen eines Aufbaues vorgesehenen Untergestell (2) anmontiert ist, indem ein Querbalken (5) der Fahrwerkeinheit an einem Gegenstück (3) des Untergestells (2) befestigt ist,
bei dem der Querbalken (5) an jedem Ende einstückig gegossen einen Bock (7) trägt, von dem jeweils ein Schwingemittel (13) ausgeht, und
bei dem die beiden Schwingemittel (13) einstückig gegossen mit einer Starrachse (12) sind und jeweils auf der dem zugeordneten Bock (7) gegenüberliegenden Seite der Starrachse (12) einstückig gegossen Federmittel (9,14) tragen,
***dadurch gekennzeichnet*,**
**daß** das Schwingemittel (13) jeweils ein vom Bock (7) gesondertes Schwingestück (13) ist, das am Bock (7) mittels eines Schwinggelenks (15) angebracht ist und zwischen einer ersten Stellung und einer zweiten Stellung drehbar ist, und
**daß** die Federmittel eine Hülse (14) und einen in diese ragenden Zapfen (9) bilden, die gegeneinander beweglich sind und von denen das eine mit dem Schwingestück (13) einstückig gegossen ist und das andere über eine Strebe (8) mit dem Querbalken (5) einstückig gegossen ist.

2. Modell-Fahrwerk nach Anspruch 1, **dadurch gekennzeichnet, daß** bei der ersten Stellung des Schwingestücks (13) die Hülse (14) gegen die Strebe (8) gelegt ist.

3. Modell-Fahrwerk nach Anspruch 1 oder 2, **dadurch gekennzeichnet daß** bei der zweiten Stellung des Schwingestücks (13) eine an dem Schwingestück nahe dem Schwinggelenk (15) vorgesehene, radial wegragende Nase (17) gegen einen Bereich (18) des Bocks (7) gelegt ist.

4. Modell-Fahrwerk nach Anspruch 1, 2 oder 3, **dadurch gekennzeichnet, daß** der Zapfen (9) an der Strebe (8) und die Hülse (14) an dem Schwingestück (13) sitzt.

5. Modell-Fahrwerk nach einem der vorhergehenden Ansprüche, **dadurch gekennzeichnet, daß** der Bock (7) ein Maul (16) bildet, in dem ein Gelenkbereich des Schwingestücks (13) beidseits geführt aufgenommen ist.

6. Modell-Fahrwerk nach einem der vorhergehenden Ansprüche, **dadurch gekennzeichnet, daß** die Strebe (8) das Federmittel (9, 14) auf der dem Bock (7) gegenüberliegenden Seite mit einem Fortsatz (10) überragt und der Fortsatz (10) mit einem seitlichen Loch (11) zum montierenden Einschieben eines Schutzblech-Nippels versehen ist.

7. Modell-Fahrwerk nach einem der vorhergehenden Ansprüche, **dadurch gekennzeichnet, daß** zwei Fahrwerkeinheiten nebeneinander angeordnet sind und die in einer Linie angeordneten Streben (8) der beiden Fahrwerkeinheiten einstückig gegossen ineinander übergehen.

8. Modell-LKW mit einem Modell-Fahrwerk nach einem der vorhergehenden Ansprüche.

## Claims

1. A model chassis of a lorry,
in which a chassis unit is mounted on a sub-frame (2) provided to support a body, a transverse member (5) of the chassis unit being fastened to a counter member (3) of the sub-frame (2),
in which the transverse member (5) carries a frame (7) which is cast in an integral manner at each end and from which one respective rocker means (13) projects in each case, and
in which the two rocker means (13) are cast in an integral manner with a rigid axle (12) and in each case carry springing means (9, 14) cast in an integral manner on the side of the rigid axle (12) opposite the associated frame (7),
**characterized in that**
the rocker means (13) is in each case a rocker member (13) which is separate from the frame (7) and which is attached to the frame (7) by means of a rocker joint (15) and is rotatable between a first position and a second position, and
the springing means form a sleeve (14) and a pin (9) projecting into the latter, which sleeve (14) and pin (9) are movable relative to each other and of which the sleeve (14) is cast in an integral manner with the rocker member (13) and the pin (9) is cast in an integral manner with the transverse member (5) by way of a brace (8).

2. A model chassis according to Claim 1, **characterized in that** in the first position of the rocker member (13) the sleeve (14) is set against the brace (8).

3. A model chassis according to Claim 1 or 2, **characterized in that** in the second position of the rocker member (13) a radially projecting nose (17) provided on the rocker member in the vicinity of the rocker joint (15) is set against a region (18) of the frame (7).

4. A model chassis according to Claim 1, 2 or 3, **characterized in that** the pin (9) is mounted on the brace (8) and the sleeve (14) is mounted on the rocker member (13).

5. A model chassis according to one of the preceding Claims, **characterized in that** the frame (7) forms a throat (16) in which an articulation region of the rocker member (13) is received in a guided manner on both sides.

6. A model chassis according to one of the preceding Claims, **characterized in that** the brace (8) projects with an extension (10) beyond the springing means (9, 14) on the side opposite the frame (7), and the extension (10) is provided with a lateral hole (11) for the insertion of a mudguard nipple for assembly purposes.

7. A model chassis according to one of the preceding Claims, **characterized in that** two chassis units are arranged adjacent to each other, and the braces (8) of the two chassis units arranged in one line pass into each other in an integrally cast manner.

8. A model lorry with a model chassis according to one of the preceding Claims.

## Revendications

1. Maquette de train de roulement d'un camion,
sur laquelle une unité de train de roulement est rapportée sur un châssis (2) prévu pour le port d'une carrosserie par le fait qu'une poutre transversale (5) de l'unité de train de roulement est fixée sur une pièce inverse (3) du châssis (2),
sur laquelle la poutre transversale (5) porte sur chaque extrémité (13) un support (7) coulé d'une seule pièce, duquel part respectivement un moyen oscillant (13), et
sur laquelle les deux moyens oscillants (13) sont coulés d'une seule pièce avec un axe rigide (12) et portent des moyens à ressort (9, 14), coulés d'une seule pièce respectivement sur le côté, opposé au support (7) associé, de l'axe rigide (12),
**caractérisée**
**en ce que** le moyen oscillant (13) est respectivement une pièce oscillante (13) séparée du support (7), qui est disposée sur le support (7) au moyen d'une articulation oscillante (15) et peut tourner entre une première position et une seconde position,
et
**en ce que** les moyens à ressort forment une douille (14) et un tenon (9) dépassant dans celle-ci, qui sont mobiles l'un par rapport à l'autre et dont l'un est coulé d'une seule pièce avec la pièce oscillante (13) et l'autre est coulé d'une seule pièce avec la poutre transversale (5) au moyen d'un montant (8).

2. Maquette de train de roulement selon la revendication 1, **caractérisée en ce que** la douille (14) est posée contre le montant (8) dans la première position de la pièce oscillante (13).

3. Maquette de train de roulement selon la revendication 1 ou 2, **caractérisée en ce que**, avec la seconde position de la pièce oscillante (13), un ergot (17) prévu sur la pièce oscillante à proximité de l'articulation oscillante (15) et dépassant radialement en s'éloignant est posé contre une zone (18) du support (7).

4. Maquette de train de roulement selon la revendication 1, 2 ou 3, **caractérisée en ce que** le tenon (9) est situé sur le montant (8) et la douille (14) sur la pièce oscillante (13).

5. Maquette de train de roulement selon l'une quelconque des revendications précédentes, **caractérisée en ce que** le support (7) forme une mâchoire (16) dans laquelle une zone articulée de la pièce oscillante (13) est réceptionnée guidée des deux côtés.

6. Maquette de train de roulement selon l'une quelconque des revendications précédentes, **caractérisée en ce que** le montant (8) dépasse du moyen à ressort (9, 14) avec un prolongement (10) sur le côté opposé au support (7) et le prolongement (10) est pourvu d'un trou (11) latéral pour l'introduction par montage d'un nipple pour tôle de protection.

7. Maquette de train de roulement selon l'une quelconque des revendications précédentes, **caractérisée en ce que** deux unités de train de roulement sont disposées l'une à côté de l'autre et les montants (8), disposés sur une ligne, des deux unités de train de roulement sont coulés d'une seule pièce et se confondent.

8. Maquette de camion équipée d'une maquette de train de roulement selon l'une quelconque des revendications précédentes.
